# EUROPEAN PATENT SPECIFICATION

(11) **EP 0 613 143 B1**
(45) Date of publication and mention of the grant of the patent: **26.01.2000**
(21) Application number: 94301269.0
(22) Date of filing: 23.02.1994
(51) Int. Cl.: G11B 27/00, G11B 17/22, G11B 17/30

(54) **Disc playing apparatus with auto-changer mechanism**
Plattenspieler mit automatischem Wechsler
Lecteur de disques avec changeur automatique

(30) Priority: 24.02.1993 JP 3559893
(43) Date of publication of application: 31.08.1994
(73) Proprietor: KABUSHIKI KAISHA TOSHIBA, Kawasaki-shi, Kanagawa-ken 210-8572 (JP)
(72) Inventor: Echigo, Toshiyuki, c/o Intellectual Property Div., Minato-ku, Tokyo (JP)
(74) Representative: BATCHELLOR, KIRK & CO.

(56) References cited:
- US-A- 4 538 253
- US-A- 4 539 663
- US-A- 4 599 716
- US-A- 4 601 026
- PATENT ABSTRACTS OF JAPAN vol. 15 no. 364 (P-1252) ,13 September 1991 & JP-A-03 142747 (NEC CORP.) 18 June 1991,
- PATENT ABSTRACTS OF JAPAN vol. 16 no. 296 (P-1378) ,30 June 1992 & JP-A-04 079091 (NEC CORP.) 12 March 1992,
- PATENT ABSTRACTS OF JAPAN vol. 9 no. 76 (P-346) ,5 April 1985 & JP-A-59 070063 (MATSUSHITA DENKI SANGYO K.K.) 24 November 1984,

## Description

The present invention relates generally to disc playing systems, and more particularly to a disc playing system having an auto-changer mechanism.

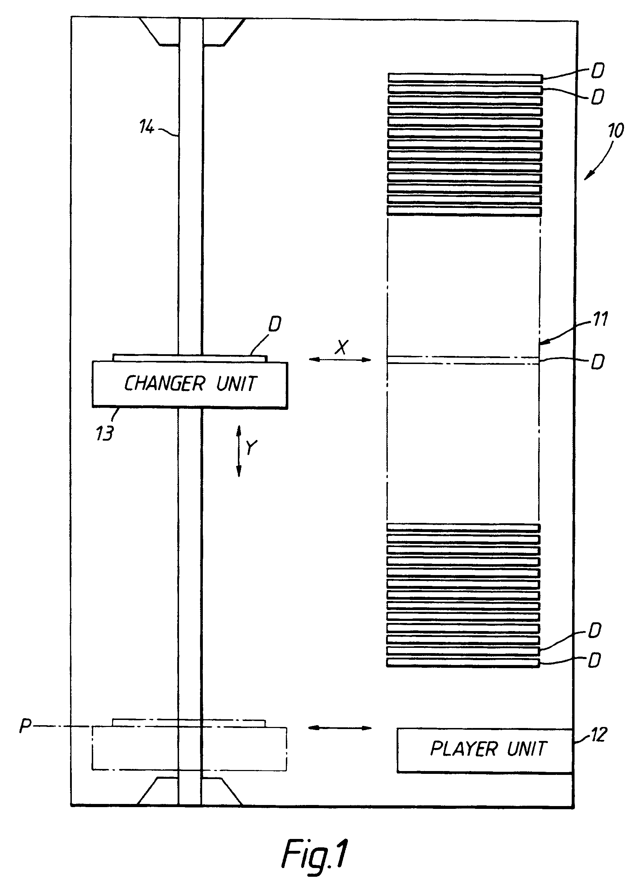

There are several types of conventional disc playing systems for compact discs or laser discs that have an auto-changer mechanism. Figure 1 illustrates a conventional disc playing system with an auto-changer mechanism. The disc playing system 10 includes a disc magazine 11 for storing a plurality of discs D, for instance, 100 discs. Each disc D is positioned at an individual address in disc magazine 11. A control unit (not shown) stores the address of each disc according to the disc number by which the discs are identified. When a user requests that a particular disc is to be played, the control unit causes an auto-changer mechanism to extract the particular disc from the corresponding address in the disc magazine 11. The auto-changer mechanism includes a changer unit 13, separate from the disc magazine 11, which is capable of moving back and forth along guide shaft 14 in the direction of arrow Y. In order to play a requested disc, first the requested disc must be extracted from the disc magazine. To extract the requested disc, the changer unit 13 moves to the address at which the requested disc is positioned, and then removes the requested disc from magazine 11 in the direction of arrow X. Following this operation, changer unit 13, together with the requested disc, moves along guide shaft 14 in the direction of the Y arrow to a position adjacent to a player unit 12. The changer unit 13 then supplies the requested disc to player unit 12, and the player unit 12 plays the requested disc. After the disc has been played, the changer unit returns the requested disc to its previous address in the disc magazine 11 by the movements described above. Between requests, the control unit controls the changer unit 13 to remain positioned at a stand-by position P. In the conventional disc playing system 10, the stand-by position P is set to the position adjacent to player unit 12.

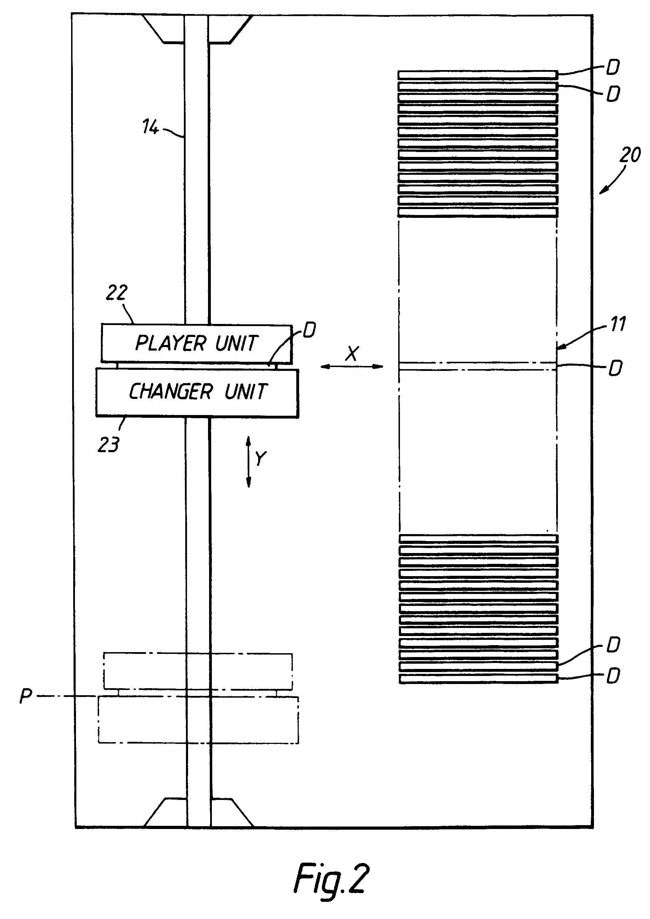

Figure 2 illustrates another disc playing system 20 having an auto-changer mechanism. The disc playing system 20 includes a player unit 22 and a changer unit 23. The player unit 22 and changer unit 23 of Figure 2 differ from the player unit 12 and changer unit 13 of the disc playing system 10 in Figure 1 in that player unit 22 is coupled to changer unit 23 such that the player unit 22 and the changer unit 23 move together along guide shaft 14 in the direction of the Y arrow. The disc playing system 20 typically plays small discs, such as audio compact discs. In the disc playing system 20, the stand-by position P of the changer unit 23 may be freely set. For example, the stand-by position P of the changer unit 23 may be set to a position corresponding to one end of the disc magazine 11 as shown in Figure 2. Or, the stand-by position P may be set to a position corresponding to the address of the last disc played.

Examples of the auto-changer mechanism as described above are described in detail in U.S. Patents No. 4599716, No. 4601026 and No. 4633452.

The disc playing systems 10 and 20 of Figures 1 and 2, respectively, experience a waiting time defined as the interval between the time of request and the time the requested disc begins to play. The waiting time is dependent upon the relative distance between the stand-by position P of the changer unit and the address of the requested disc in disc magazine 11. In other words, the farther the distance between the stand-by position P and the address of the requested disc, the longer the waiting time. If many of the discs frequently requested are stored in an address far from the stand-by position P, the overall waiting time of the disc playing system will be excessively long. Accordingly, such a disc playing system may not be preferable for commercial use.

In addition US 4,538,253 and US 4,539,663 describe a system in which the discs can be rearranged in accordance with their playing frequency.

The present invention seeks to provide a disc playing apparatus with auto-changer mechanism in which the waiting time of the discs most frequently requested is reduced, by providing an improved method of rearranging them.

Accordingly the present invention provides a disc playing apparatus comprising;
a disc magazine having a plurality of addresses at each of which a disc can be stored;
a changer device for removing a selected disc from the magazine, transferring the disc to a player device at which the disc is played and for returning the disc to the magazine;
control means for storing and updating the number of requests to play each of the discs and for controlling the changer device to position the discs in the addresses relative to a reference position in accordance with said number of requests to play each of the discs; characterised in that said control means is arranged to
   (a) control said changer device to remove a first disc from a first address of said disc magazine and to transfer said first disc to said player device;
   (b) calculate a return address for said first disc according to the number of requests to play the first disc relative to the number of requests to play each of said other discs;
   (c) determine whether or not a second disc is stored at the return address;
   (d) control the changing device to move the second disc to said first address, if the controller determines that the second disc is stored at the return address;
   (e) control the changing device to return the first disc to the return address.

In order that the invention may be more readily understood, it will now be described, by way of example only, with reference to the accompanying drawings, in which:-
Figure 1 is a block diagram of a disc playing system having an auto-changer mechanism;
Figure 2 is a block diagram of another type of disc playing system having an auto-changer mechanism;
Figure 3 is a diagram showing the contents of management information utilized by a controller in accordance with the present invention;
Figure 4 is a flow chart showing a disc rearrangement operation of the controller in accordance with the present invention;
Figures 5 to 8 are diagrams showing a series of disc address arrangements in accordance with successive rearrangement operations of the controller as shown in Figure 4.

According to a first embodiment of the present invention, a disc playing system 10 as shown in Figure 1 includes a disc magazine 11 for storing a plurality of discs D, each at an individual address within the disc magazine 11, a player unit 12, an auto-changer mechanism that includes a changer unit 13, and a controller (not shown).

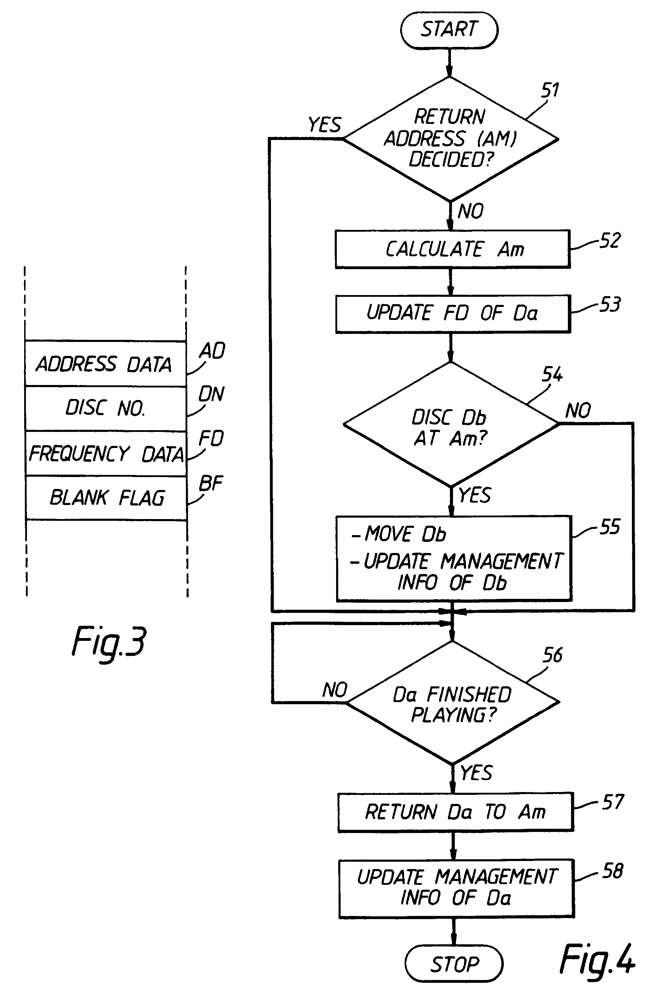

The controller includes a microcomputer and a memory for storing and updating management information corresponding to each address within the disc magazine 11. As shown in Figure 3, for each address within the disc magazine 11, the management information includes address data AD, disc number DN, frequency data FD and blank flag BF. Address data AD represents the particular address with the disc magazine 11, i.e., A1, A2, ... An, in order of increasing distance from the stand-by position P of the changer unit. Disc number DN identifies the particular disc currently stored at address AD within the disc magazine 11. Frequency data FD represents the number of times that the disc identified by the disc number DN and currently stored at address AD has been requested to be played. Blank flag BF represents whether a disc is currently stored at address data AD.

The controller performs a rearrangement operation as follows. When a first disc is playing, the controller controls the changer unit 13 to either remain idle or rearrange the address of a second disc in the disc magazine 11, such that, after the first disc has been played, the first disc can be returned to a particular address in the disc magazine 11 in accordance with the number of requests to play the first disc relative to the number of requests to play each of the discs in the disc magazine 11. After the first disc has been played, the controller controls the changer unit 13 to return the first disc to that particular address in the disc magazine 11.

Figure 4 is a flow chart showing the control scheme of the controller's rearrangement operation as discussed above. In decision box S1, the controller determines whether or not the return address Am to which the disc Da is to be returned has been decided. If the return address Am has been decided, flow jumps to decision box S6 discussed below. If the return address Am has not decided, flow continues to box S2 wherein the controller calculates the return address Am according to the frequency data FD corresponding to each address in disc magazine 11. In box S2, the controller calculates the return address Am by first determining whether the frequency data FD of the disc at address A1, which is the address closest to the stand-by position P, is equal to or less than the current frequency data FD of disc Da. If not, the controller then determines whether the frequency data FD of the disc at address A2 is equal to or less than the current frequency data FD of disc Da. If not, the controller continues to step through each address of the disc magazine 11. When the controller determines that the frequency data FD of the disc at the particular address is equal to or less than the current frequency data FD of disc Da, the controller equates the return address Am with the particular address. After calculating the return address Am, in box S3 the controller increments by one the frequency data FD corresponding to disc Da. Then, in decision box S4 the controller determines whether or not another disc Db is presently stored at the return address Am in the disc magazine 11 by reading the flag BF corresponding to address Am. If the controller determines that a disc Db is not presently stored at the return address Am, flow jumps to decision box S6 discussed below. If the controller determines that a disc Db is presently stored at the return address Am, flow continues to box S5. In box S5, the controller controls the changing unit 13 to move disc Db to the address from which disc Da had been removed prior to being played, and updates the management information for the address from which disc Da had been removed, which now stores disc Db. Then, in decision box S6 the controller waits until it determines that disc Da has completed playing. When the controller determines that disc Da has completed play, flow continues to box S7 wherein the controller controls the changing unit 13 to return disc Da to the return address Am. Then, in box S8, the controller updates the management information of address Am, which now stores disc Da. By performing these steps, the controller performs the rearrangement operation.

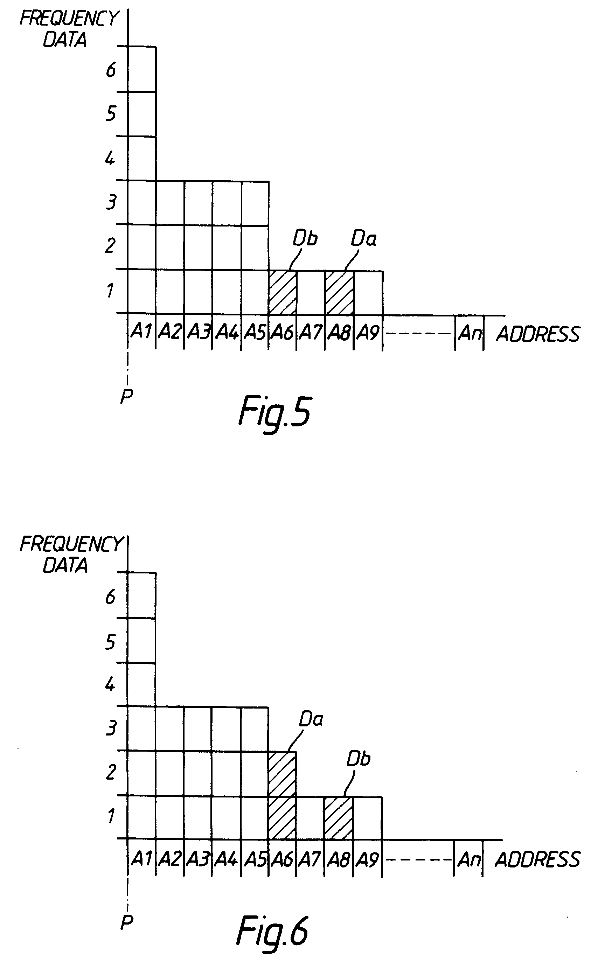

Figures 5 to 8 show disc arrangements following a series of three rearrangement operations performed by the controller in accordance with the control scheme as shown in Figure 4. In these figures, the horizontal axes depict each address, A1 .. An, while the vertical axes depict frequency data FD (i.e., the number of times that a particular disc has been requested to be played). Figure 5 shows a disc arrangement prior to the series of rearrangement operations. A disc Da has a frequency data FD equal to 1 and is currently being stored at address A8. Suppose the Disc Da is requested to be played. Disc Da is extracted from disc magazine 11 at address A8 and supplied to player unit 12 where it is played. While disc Da is being played, the controller performs a first rearrangement operation according to the steps discussed above. The controller first calculates the return address of Disc Da by determining the address at which the frequency data FD of the disc at such address is equal to or less than the current frequency data of disc Da (i.e. 1). In this case, address A6 is found as the return address. After calculating the return address A6, the controller increments to 2 the frequency data FD corresponding to disc Da. At this time, the controller determines that disc Db is currently being stored at address A6, and therefore controls the changing unit 13 to transfer disc Db to address A8. In addition, after the controller determines the playing of disc Da is complete, the controller controls the changer unit 13 to return disc Da to address A6 and updates the management information corresponding to address A6. After the first rearrangement operation, the discs are arranged as shown in Figure 6.

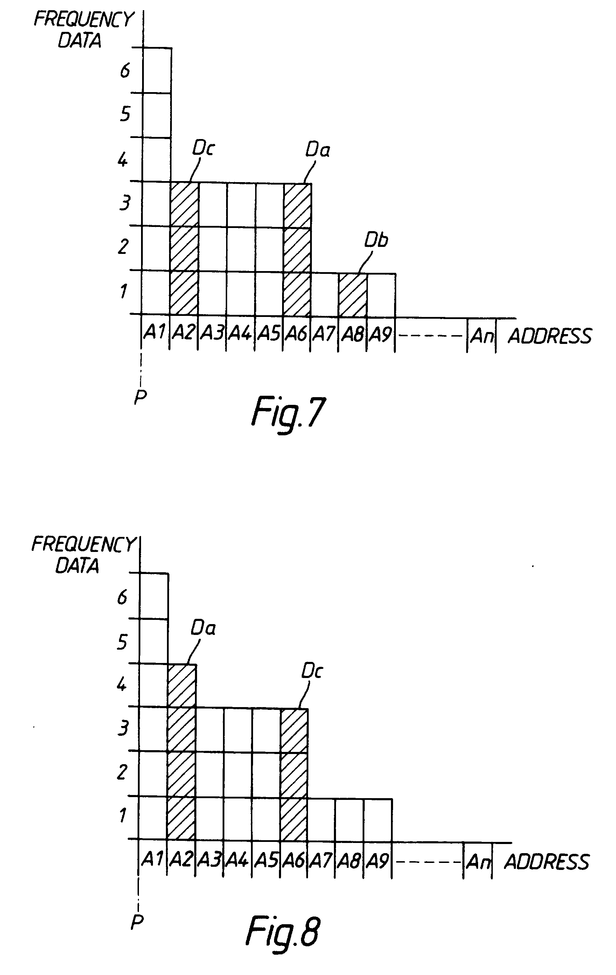

Suppose, then, disc Da is requested to be played a second time. Disc Da is extracted from disc magazine 11 at address A6 and supplied to player unit 12 where it is played. While disc Da is being played, the controller performs a second rearrangement operation. The controller first calculates the return address of Disc Da by determining the address at which the frequency data FD of the disc at such address is equal to or less than the current frequency data of disc Da (i.e. 2). In this case, address A6 is found as the return address. After calculating the return address A6, the controller increments to 3 the frequency data FD corresponding to disc Da. At this time, the controller determines that no disc is currently being stored at address A6. In addition, after the controller determines the playing of disc Da is complete, the controller controls the changer unit 13 to return disc Da to address A6 and updates the management information corresponding to address A6. After the second rearrangement operation, the discs are arranged as shown in Figure 7.

Suppose, then, disc Da is requested to be played a third time. Disc Da is extracted from disc magazine 11 at address A6 and supplied to player unit 12 where it is played. While disc Da is being played, the controller performs a third rearrangement operation. The controller first calculates the return address of disc Da by determining the address at which the frequency data FD of the disc at such address is equal to or less than the current frequency data of disc Da (i.e. 3). In this case, address A2 is found as the return address. After calculating the return address A2, the controller increments to 4 the frequency data FD corresponding to disc Da. At this time, the controller determines that disc Dc is currently being stored at address A2, and therefore controls the changing unit 13 to transfer disc Dc to address A6. In addition, after the controller determines the playing of disc Da is complete, the controller controls the changer unit 13 to return disc Da to address A2 and updates the management information corresponding to address A2. After the third rearrangement operation, the discs are arranged as shown in Figure 8.

In accordance with the above rearrangement operations, discs having high number of requests are automatically stored at an address closer to the stand-by position of the changer unit 13 (i.e., the position of the player unit 12) than those discs having a lower number of requests. In addition, addresses where no discs are stored are automatically collected at positions farthest from the stand-by position of the changer unit 13. As a result, the playing of frequently selected discs can be quickly initiated, and the overall waiting time is reduced.

While the first embodiment utilizes a disc playing system as described in Figure 1, the present invention can be applied to a disc playing system like that described in Figure 2 as well. Note that the stand-by position P of the changer unit 23 may be freely set. For example, the stand-by position P may be set to a position corresponding to the center of the disc magazine 11. In that case, the present invention can be utilized to implement a controller that automatically stores discs having high number of requests at positions close to the stand-by position P at the center of the disc magazine 11. As a result, the playing of frequently selected discs can be quickly initiated, and the overall waiting time is reduced.

The stand-by position P of the disc playing system as shown in Figure 2 may also be set to a position that does not correspond to a reference position used by the controller in the rearrangement operation. For example, the stand-by position may be set to the address of the last disc played, and the reference position set to a position at the center of the disc magazine 11. In this case, the present invention is utilized to implement a controller that automatically stores discs having high number of requests at positions close to the reference position at the center of the disc magazine 11. As a result, the frequency that changer unit 23 is positioned near the reference position becomes high, the playing of frequently selected discs can be quickly initiated, and the overall waiting time is reduced.

Moreover, in the case where a plurality of player units (or changer units) are used, a plurality of reference positions may be provided together with a controller that automatically stores discs having high number of requests at positions close to the each reference position.

As described above, the present invention provides a disc playing apparatus with an auto-changer mechanism in which the waiting time is reduced so that the playing of frequently selected discs can be quickly initiated. In addition, the present invention provides a disc playing apparatus with an auto-changer mechanism in which the arrangement of discs in a disc magazine is optimized according to the frequency of requests to play each disc.

While the present invention has been illustrated and described in detail in the drawing and foregoing description, it will be recognized that changes and modifications can and will occur to those skilled in the art. It is therefore intended to cover such modifications, the scope of the invention being determined by the appended claims.

## Claims

1. A disc playing apparatus comprising;
a disc magazine (11) having a plurality of addresses (A1-An) at each of which a disc (D) can be stored;
a changer device (13) for removing a selected disc (D) from the magazine (11), transferring the disc to a player device (12) at which the disc is played and for returning the disc to the magazine;
control means for storing and updating the number of requests to play each of the discs and for controlling the changer device (13) to position the discs in the addresses (A1-An) relative to a reference position in accordance with said number of requests to play each of the discs;
characterised in that said control means is arranged to
(a) control said changer device to remove a first disc from a first address of said disc magazine and to transfer said first disc to said player device;
(b) calculate a return address for said first disc according to the number of requests to play the first disc relative to the number of requests to play each of said other discs;
(c) determine whether or not a second disc is stored at the return address;
(d) control the changing device to move the second disc to said first address, if the controller determines that the second disc is stored at the return address;
(e) control the changing device to return the first disc to the return address.

2. A disc playing apparatus according to claim 1,
wherein the control means calculates the return address for the first disc by determining the address at which the stored number of requests for the particular disc at that address is equal to or less than the current number of requests to play the first disc.

3. A disc playing apparatus according to claim 2, wherein the control means stores and updates a blank flag for each address within the disc magazine, each blank flag indicating whether a disc is currently stored at the particular address, and the control means determines whether or not a second disc is stored at the return address by reading the blank flag corresponding to the return address.

4. A disc playing apparatus according to any preceding claim, wherein said reference position is a position adjacent to said player device.

5. A disc playing apparatus according to any preceding claim, wherein said player device is integral with said changer device, and said reference position is a position adjacent to the center of said disc magazine.

6. A method of operating a disc playing apparatus having a disc magazine for storing each of a plurality of discs at an individual address, a changer device for selectively removing one of said plurality of discs from said disc magazine, for returning said one disc to said disc magazine, and for transferring said one disc to a player device for playing said one disc, and a control means for controlling operation of said changer device; said method comprising the steps of storing the number of requests to play each of the discs; and controlling said changer device to rearrange the address of the discs relative to a reference position in accordance with the stored number of requests to play each of the discs, characterised by the steps of
(a) calculating a return address of a first disc according to the number of requests to play the first disc relative to the number of requests to play each of said plurality of discs;
(b) determining whether or not a second disc is stored at the return address;
(c) controlling the changing device to move the second disc to an address from which the first disc had been previously removed when the control means determines that the second disc is stored at the return address; and
(d) controlling the changing device to return the first disc to the return address.

7. A method of operating a control means of a disc playing apparatus according to claim 6, wherein the step of calculating the return address of the first disc comprises determining the address at which the stored number of requests for the particular disc at such address is equal to or less than the current number of requests to play the first disc.

8. A method of operating a control means of a disc playing apparatus according to claim 6, wherein said control means stores and updates a blank flag for each address within the disc magazine, each blank flag indicating whether a disc is currently stored at the particular address, and the step of determining whether or not a second disc is stored at the return address comprises reading the blank flag corresponding to the return address.

## Patentansprüche

1. Plattenspieler mit
einem Plattenmagazin (11) mit mehreren Adressen (A1-An), auf denen je eine Platte (D) gespeichert werden kann,
einem Wechsler (13) zur Entfernung einer gewählten Platte (D) aus dem Magazin (11), Umsetzung der Platte auf ein Spielgerät (12), auf dem die Platte abgespielt wird, und zum Zurücksetzen der Platte in das Magazin,
Steuereinrichtungen zurSpeicherung und Aktualisierung der Zahl der Anforderungen, jede der Platten zu spielen, und zur Steuerung des Wechslers (13), um die Platten in den Adressen (A1-An) relativ zu einer Bezugsposition gemäß der genannten Anzahl der Anfragen, jede der Platten zu spielen, zu positionieren, dadurch gekennzeichnet, daß die genannten Steuereinrichtungen angeordnet sind, um
(a) den Wechsler zu steuern, um eine erste Platte aus einer ersten Adresse des Plattenmagazins zu entfernen und sie auf das Spielgerät zu setzen,
(b) eine Rücksprungadresse für die genannte erste Platte zu berechnen gemäß der Anzahl der Anforderungen, die erste Platte zu spielen, relativ zu der Anzahl der Anforderungen, jede der anderen Platten zu spielen,
(c) zu bestimmen, ob eine zweite Platte auf der Rücksprungadresse gespeichert ist,
(d) den Wechsler zu steuern, um die zweite Platte auf die erste Adresse zu bringen, wenn das Steuergerät feststellt, daß die zweite Platte auf der Rücksprungadresse gespeichert ist,
(e) den Wechsler zu steuern, um die erste Scheibe zur Rücksprungadresse zurückzubringen.

2. Plattenspieler nach Anspruch 1, bei dem die Steuereinrichtung die Rücksprungadresse für die erste Platte durch die Bestimmung der Adresse berechnet, bei der die gespeicherte Anzahl der Anforderungen einer bestimmten Platte auf jeder Adresse gleich oder kleiner als die gegenwärtige Anzahl der Anforderungen ist, die erste Platte zu spielen.

3. Plattenspieler nach Anspruch 2, bei dem die Steuereinrichtung in dem Plattenmagazin für jede Adresse eine Leermarke speichert und aktualisiert, wobei jede Leermarke anzeigt, ob auf der bestimmten Adresse gegenwärtig eine Platte gespeichert ist, und die Steuereinrichtung durch Lesen der Leermarke entsprechend der Rücksprungadresse bestimmt, ob auf der Rücksprungadresse eine zweite Platte gespeichert ist oder nicht.

4. Plattenspieler nach einem vorhergehenden Anspruch, bei dem die genannte Bezugsposition eine Position neben dem Spielgerät ist.

5. Plattenspieler nach einem vorhergehenden Anspruch, bei dem das genannte Spielgerät mit dem Wechsler integral ausgebildet ist und die genannte Bezugsposition eine Position nahe der Mitte des Plattenmagazins ist.

6. Verfahren zum Betreiben eines Plattenspielers mit einem Plattenmagazin zur Speicherung jeder einzelnen aus einer Mehrzahl von Platten auf einer individuellen Adresse, einem Wechselgerät zur wahlweisen Entnahme einer der mehreren Platten aus dem Plattenmagazin, zur Rückführung dieser einen Platte zu dem Plattenmagazin und zum Umsetzen dieser einen Platte auf ein Spielgerät zum Abspielen dieser einen Platte, und einer Steuereinrichtung zum Steuern des Betriebs des Wechslers, wobei das Verfahren die Stufen umfaßt der Speicherung der Anzahl der Anforderungen, jede der Platten zu spielen, und der Steuerung des Wechslers, die Adresse der Platten relativ zu einer Bezugsposition gemäß der gespeicherten Anzahl von Anforderungen, jede der Platten zu spielen, umzuordnen, gekennzeichnet durch die Stufen der
(a) Berechnung der Rücksprungadresse einer ersten Platte gemäß der Anzahl der Anforderungen, die erste Platte zu spielen, relativ zu der Anzahl der Anforderungen, jede der genannten Mehrzahl von Platten zu spielen,
(b) Bestimmung, ob eine zweite Platte auf der Rücksprungadresse gespeichert ist oder nicht,
(c) Steuerung des Wechslers, um die zweite Platte auf eine Adresse zu bringen, von der die erste Platte zuvor entfernt wurde, wenn die Steuereinrichtung feststellt, daß die zweite Platte auf der Rücksprungadresse gespeichert ist, und
(d) Steuerung des Wechslers, um die erste Platte auf die Rücksprungadresse zurückzubringen.

7. Verfahren zum Betreiben einer Steuereinrichtung für ein Plattenspielgerät nach Anspruch 6, bei dem die Stufe der Berechnung der Rücksprungadresse der ersten Platte die Bestimmung der Adresse umfaßt, bei der die gespeicherte Anzahl der Anfragen nach der bestimmten Platte auf dieser Adresse gleich oder kleiner als die gegenwärtige Anzahl der Anforderungen ist, die erste Platte abzuspielen.

8. Verfahren zum Betreiben einer Steuereinrichtung für ein Plattenspielgerät nach Anspruch 6, bei dem die Steuereinrichtung eine Leermarke für jede Adresse in dem Plattenmagazin speichert und aktualisiert, wobei jede Leermarke anzeigt, ob auf der bestimmten Adresse gegenwärtig eine Platte gespeichert ist, und bei der die Stufe der Feststellung, ob eine zweite Platte auf der Rücksprungadresse gespeichert ist oder nicht, die Ablesung der der Rücksprungadresse entsprechenden Leermarke umfaßt.

## Revendications

1. Dispositif de lecture de disques comprenant ;
un magasin de disques (11) comportant une pluralité d'adresses (A1-An) à chacune desquelles un disque (D) peut être stocké ;
un dispositif changeur (13) destiné à retirer un disque (D) sélectionné du magasin (11), transférer le disque vers un dispositif de lecture (12) au niveau duquel le disque est lu et ramener le disque dans le magasin ;
des moyens de commande pour stocker et mettre à jour le nombre de requêtes pour lire chacun des disques et pour commander le dispositif changeur (13) pour positionner les disques aux adresses (A1-An) relatives à une position de référence en fonction dudit nombre de requêtes pour lire chacun des disques ; caractérisé en ce que lesdits moyens de commande sont agencés pour
(a) commander ledit dispositif changeur pour enlever un premier disque d'une première adresse dudit magasin de disques et pour transférer ledit premier disque vers ledit dispositif de lecture ;
(b) calculer une adresse de retour pour ledit premier disque en fonction du nombre de requêtes pour lire le premier disque par rapport au nombre de requêtes pour lire chacun desdits autres disques ;
(c) déterminer si un deuxième disque est stocké ou non à l'adresse de retour ;
(d) commander le dispositif changeur pour déplacer le deuxième disque à ladite première adresse, si le contrôleur détermine que le deuxième disque est stocké à l'adresse de retour ;
(e) commander le dispositif changeur pour ramener le premier disque à l'adresse de retour.

2. Dispositif de lecture de disques selon la revendication 1, dans lequel les moyens de commande calculent l'adresse de retour pour le premier disque en déterminant l'adresse à laquelle le nombre stocké de requêtes pour le disque particulier à cette adresse est égal ou inférieur au nombre courant de requêtes pour lire le premier disque.

3. Dispositif de lecture de disques selon la revendication 2, dans lequel les moyens de commande stockent et mettent à jour un indicateur d'absence pour chaque adresse à l'intérieur du magasin de disques, chaque indicateur d'absence indiquant si un disque est actuellement stocké à l'adresse particulière et les moyens de commande déterminent si un deuxième disque est stocké ou non à l'adresse de retour en lisant indicateur d'absence correspondant à l'adresse de retour.

4. Dispositif de lecture de disques selon l'une quelconque des revendications précédentes, dans lequel ladite position de référence est une position adjacente audit dispositif de lecture.

5. Dispositif de lecture de disques selon l'une quelconque des revendications précédentes, dans lequel ledit dispositif de lecture fait partie intégrante dudit dispositif changeur et ladite position de référence est une position adjacente au centre dudit magasin de disques.

6. Procédé de fonctionnement d'un dispositif de lecture de disques comportant un magasin de disques destiné à stocker chaque disque parmi une pluralité de disques à une adresse individuelle, un dispositif changeur pour enlever de manière sélective un disque parmi ladite pluralité de disques dudit magasin de disques, pour ramener ledit un disque vers ledit magasin de disques et pour transférer ledit un disque vers un dispositif de lecture pour lire ledit un disque et des moyens de commande pour commander le fonctionnement dudit dispositif changeur ; ledit procédé comprenant les étapes consistant à stocker le nombre de requêtes pour lire chacun des disques ; et commander ledit dispositif changeur pour réagencer les adresses des disques par rapport à une position de référence en fonction du nombre de requêtes stockées pour lire chacun des disques, caractérisé par les étapes consistant à
(a) calculer une adresse de retour d'un premier disque en fonction du nombre de requêtes pour lire le premier disque par rapport au nombre de requêtes pour lire chaque disque de ladite pluralité de disques ;
(b) déterminer si un deuxième disque est stocké ou non à l'adresse de retour ;
(c) commander le dispositif changeur pour déplacer le deuxième disque à une adresse d'où le premier disque a été précédemment enlevé, lorsque les moyens de commande déterminent que le deuxième disque est stocké à l'adresse de retour ; et
(d) commander le dispositif changeur pour ramener le premier disque à l'adresse de retour.

7. Procédé de fonctionnement de moyens de commande d'un dispositif de lecture de disques selon la revendication 6, dans lequel l'étape de calcul de l'adresse de retour du premier disque comprend la détermination de l'adresse à laquelle le nombre stocké de requêtes pour le disque particulier à cette adresse est égal ou inférieur au nombre courant de requêtes pour lire le premier disque.

8. Procédé de fonctionnement de moyens de commande d'un dispositif de lecture de disques selon la revendication 6, dans lequel lesdits moyens de commande stockent et mettent à jour un indicateur d'absence pour chaque adresse à l'intérieur du magasin de disques, chaque indicateur d'absence indiquant si un disque est actuellement stocké à l'adresse particulière et l'étape de détermination du fait qu'un deuxième disque est stocké ou non à l'adresse de retour comprend la lecture de l'indicateur d'absence correspondant à l'adresse de retour.
